# EUROPEAN PATENT APPLICATION

(11) **EP 4 601 202 A1**
(43) Date of publication of application: **13.08.2025**
(21) Application number: 25156025.6
(22) Date of filing: 05.02.2025
(51) Int. Cl.: H04B 5/24, H04B 5/26, H04B 5/45

(54) **NFC ELECTRIC FIELD DETECTION SYSTEMS AND METHODS, AND NFC DEVICES**

(30) Priority: 06.02.2024 CN 202410172257
(71) Applicant: Advanced Nova Technologies (Singapore) Holding Pte. Ltd., Singapore 189773 (SG)
(72) Inventor: DAI, Yuhua, Hangzhou 310000 (CN); ZHENG, Weijun, Hangzhou 310000 (CN)
(74) Representative: Winter, Brandl - Partnerschaft mbB

(57) **Abstract**

This specification provides an NFC electric field detection system and method, and an NFC device. The NFC electric field detection system in this specification includes an NFC antenna and a detection control circuit. The near field communication NFC antenna is configured to: in a case that an NFC radio frequency field of a terminal device is sensed, receive a first radio frequency signal transmitted by the terminal device; and the detection control module is configured to detect, according to the first radio frequency signal, that the terminal device is in a low power detection card LPCD mode; and in a case that abnormal communication is performed with the terminal device, send, to the terminal device by using the NFC antenna, a second radio frequency signal used to excite the terminal device, so as to communicate with the terminal device.

## Description

### TECHNICAL FIELD

This specification relates to the field of near field communication (NFC) technologies, and in particular, to NFC electric field detection systems and methods, and NFC devices.

### BACKGROUND

As a common near field communication technology, NFC is widely used in various scenarios such as an access control card, a transportation card, an attendance record card, a consumption card, and an identity card.

Currently, a terminal device generally works in an active mode, and normally monitors, by transmitting an electric field, whether an NFC device that works in a passive mode is approaching. However, to reduce power consumption and increase battery life, some terminal devices work in a low power card detection (LPCD) mode after the screen has been on for a period of time. Once working in the LPCD mode, if a coupling area of an antenna is insufficient or an electric field change is not obvious, it is difficult for the terminal device to exit the LPCD mode, and therefore, it may be difficult to perform normal communication.

### SUMMARY

This specification provides an improved NFC electric field detection system and method, and an NFC device.

This specification provides an NFC electric field detection system, including:
a near field communication NFC antenna, configured to: in a case that an NFC radio frequency field of a terminal device is sensed, receive a first radio frequency signal transmitted by the terminal device; and
a detection control module, configured to detect, according to the first radio frequency signal, that the terminal device is in a low power detection card LPCD mode; and in a case that abnormal communication is performed with the terminal device, send, to the terminal device by using the NFC antenna, a second radio frequency signal used to excite the terminal device, so as to communicate with the terminal device.

Further, the NFC antenna is configured to: when the terminal device transmits an NFC signal, sense, field strength of the NFC radio frequency field to form an electrical signal corresponding to the field strength;
correspondingly, the detection control module includes a signal sampling circuit and a control circuit connected to the signal sampling circuit;
the signal sampling circuit samples the electrical signal; and
the control circuit is configured to obtain characteristic information of the NFC radio frequency field of the terminal device according to a value of the electrical signal; and in a case that amplitude strength of the characteristic information meets a threshold in the LPCD mode, detect that the terminal device is in the LPCD mode; or in a case that the terminal device does not read data of the NFC electric field detection system, send the second radio frequency signal to the terminal device.

Further, the NFC antenna further includes an NFC coil and a grounded noise filtering terminal;
the NFC coil is configured to sense a radio frequency signal; and
the noise filtering terminal is configured to filter out a noise signal of the radio frequency signal sensed on the NFC coil, so that the NFC antenna receives a normal signal other than noise.

Further, the NFC coil includes at least three terminal coils; and the noise filtering terminal is disposed in a physical center of the antenna.

Further, the at least three terminal coils include an odd number of terminal coils, the noise filtering terminal is one noise filtering terminal, and the one noise filtering terminal is disposed in the physical center of the NFC antenna; and a terminal number of the odd number of terminal coils is greater than or equal to a terminal number of three terminal coils;
or
the at least three terminal coils include an even number of terminal coils, and correspondingly, the noise filtering terminal is two noise filtering terminals, and the two noise filtering terminals are disposed in the physical center of the NFC antenna; and a terminal number of the even number of terminal coils is greater than a terminal number of three terminal coils.

Further, the detection control module is configured to detect, according to the first radio frequency signal, that the terminal device is in the low power detection card LPCD mode; and in a case that abnormal communication is performed with the terminal device, generate a signal used to excite the terminal device; and
the NFC electric field detection system further includes an NFC module, configured to: receive the signal used to excite the terminal device, perform tuning with the NFC antenna, and send a modulated second radio frequency signal to the terminal device by using the NFC antenna.

Further, the NFC module includes a matching circuit and a modulation and demodulation unit connected to the matching circuit;
the matching circuit is configured to: perform tuning with the NFC antenna, and send a matched signal to the modulation and demodulation unit;
the modulation and demodulation unit is configured to: receive the matched signal, modulate the matched signal to a carrier signal to obtain the second radio frequency signal, and send the second radio frequency signal to the NFC antenna; and
the NFC antenna is further configured to send the second radio frequency signal.

Further, the matching circuit is after a cabling of the signal sampling circuit; and
the matching circuit includes an impedance element, configured to adjust an impedance parameter and a resonance frequency parameter, and further configured to adjust parasitic impact of the matching circuit on the cabling of the signal sampling circuit.

Further, the signal sampling circuit includes an amplitude signal sampling circuit, a voltage collection circuit, or a current collection circuit of an analog-to-digital converter ADC.

Further, the detection control module is further configured to: detect, according to the first radio frequency signal, that the terminal device is in the LPCD mode, and in a case that abnormal communication is performed with the terminal device, determine a terminal type of the terminal device according to a sending period of an electric field of the terminal device; and send the second radio frequency signal to the terminal device according to the terminal type.

This specification provides an NFC electric field detection method, including:
in a case that an NFC radio frequency field of a terminal device is sensed, receiving a first radio frequency signal transmitted by the terminal device; and
detecting, according to the first radio frequency signal, that the terminal device is in a low power detection card LPCD mode; and in a case that abnormal communication is performed with the terminal device, sending, to the terminal device by using an NFC antenna, a second radio frequency signal used to excite the terminal device, so as to communicate with the terminal device.

This specification provides an NFC device, where the NFC device works in a passive mode, a terminal device that communicates with the NFC device works in an active mode, and the NFC device includes the NFC electric field detection system according to any one of the foregoing.

This specification provides a machine readable storage medium, and a program is stored on the machine readable storage medium. When the program is executed by a processor, the foregoing method is implemented.

This specification provides a computer program product, including a computer program/instructions, where the computer program/instructions are executed by a processor to implement the method described in any one of the foregoing.

In some embodiments, the NFC electric field detection system in this specification includes an NFC antenna and a detection control circuit. The near field communication NFC antenna is configured to: in a case that an NFC radio frequency field of a terminal device is sensed, receive a first radio frequency signal transmitted by the terminal device; and the detection control module is configured to detect, according to the first radio frequency signal, that the terminal device is in a low power detection card LPCD mode; and in a case that abnormal communication is performed with the terminal device, send, to the terminal device by using the NFC antenna, a second radio frequency signal used to excite the terminal device, so as to communicate with the terminal device.

In the embodiments of this specification, the NFC antenna receives the first radio frequency signal transmitted by the terminal device, and the detection control circuit sends the second radio frequency signal used to excite the terminal device. In this way, when it is difficult for the terminal device to exit the LPCD mode, the terminal device is waked up by using the second radio frequency signal used to excite the terminal device, so as to be in a normal card detection mode to communicate with the terminal device. In this way, normal communication with the terminal device can be implemented, and communication efficiency is improved.

### BRIEF DESCRIPTION OF DRAWINGS

FIG. 1 is a schematic structural diagram of an NFC electric field detection system according to an embodiment of this specification;
FIG. 2 is a specific schematic structural diagram of the NFC electric field detection system shown in FIG. 1; and
FIG. 3 is a flowchart of an NFC electric field detection method according to an embodiment of this specification.

### DESCRIPTION OF EMBODIMENTS

Example implementations are described in detail herein, and examples of the example implementations are presented in the accompanying drawings. When the following description relates to the accompanying drawings, unless specified otherwise, same numbers in different accompanying drawings represent same or similar elements. The implementations described in the following example implementations do not represent all implementations consistent with this specification. On the contrary, the implementations are merely examples of apparatuses and methods that are consistent with some aspects of this specification and that are described in detail in the appended claims.

User information (including but not limited to user equipment information, personal user information, and the like) and data (including but not limited to data used for analysis, stored data, displayed data, and the like) in this specification are information and data that are authorized by a user or that are fully authorized by each party. Furthermore, related data needs to be collected, used, and processed in compliance with relevant laws, regulations and standards of relevant countries and regions, and corresponding operation entries are provided for the user to choose to authorize or reject.

Terms used in this specification are merely intended to describe specific implementations, but are not intended to limit this specification. Terms "a", "the", and "this" in singular forms in this specification and the appended claims are also intended to include plural forms, unless otherwise stated in the context clearly. It should be further understood that the term "and/or" used in this specification indicates and includes any or all possible combinations of one or more associated listed items.

It should be understood that although terms "first", "second", "third", and the like may be used in this specification to describe various types of information, the information should not be limited to the terms. These terms are merely used to distinguish between information of the same type. For example, without departing from the scope of this specification, first information can also be referred to as second information, and similarly, the second information can be referred to as the first information. Depending on the context, the word "if" used herein can be interpreted as "when" or "while" or "in response to determining".

It should be noted that, in some other embodiments, the steps of the corresponding method are not necessarily performed in the order shown and described in this specification. In some other embodiments, the method can include more or fewer steps than those described in this specification. In addition, a single step described in this specification may be decomposed into a plurality of steps in some other embodiments for description; and a plurality of steps described in this specification may be combined into a single step for description in some other embodiments.

To resolve a technical problem that it is difficult for a terminal device to exit an LPCD mode and it may be difficult to perform normal communication, an embodiment of this specification provides an NFC electric field detection system including an NFC antenna and a detection control circuit.

The near field communication NFC antenna is configured to: in a case that an NFC radio frequency field of a terminal device is sensed, receive a first radio frequency signal transmitted by the terminal device; and the detection control module is configured to detect, according to the first radio frequency signal, that the terminal device is in a low power detection card LPCD mode; and in a case that abnormal communication is performed with the terminal device, send, to the terminal device by using the NFC antenna, a second radio frequency signal used to excite the terminal device, so as to communicate with the terminal device.

In this embodiment of this specification, the NFC antenna receives the first radio frequency signal transmitted by the terminal device, and the detection control circuit sends the second radio frequency signal used to excite the terminal device. In this way, when it is difficult for the terminal device to exit the LPCD mode, the terminal device is waked up by using the second radio frequency signal used to excite the terminal device, so as to be in a normal card detection mode to communicate with the terminal device. In this way, normal communication with the terminal device can be implemented, and communication efficiency is improved.

The NFC electric field detection system in this embodiment of this specification may be applied to an NFC device. The NFC device works in a passive mode (which may also be referred to as an NFC passive device in the following), and a terminal device that communicates with the NFC device works in an active mode.

It should be noted that the terminal device may be but is not limited to a mobile terminal or a fixed card-reading device. For example, the mobile terminal may be but is not limited to a mobile phone. The fixed card-reading device may be a card reader on a bus.

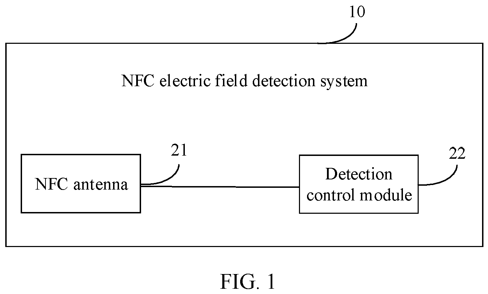

FIG. 1 is a schematic structural diagram of an NFC electric field detection system 10 according to an embodiment of this specification.

As shown in FIG. 1, the NFC electric field detection system 10 includes an NFC antenna 21 (hereinafter referred to as an antenna) and a detection control module 22 connected to the NFC antenna 21.

The NFC antenna 21 is configured to: in a case that an NFC radio frequency field of a terminal device is sensed, receive a first radio frequency signal transmitted by the terminal device. The first radio frequency signal in this specification may include but is not limited to including an NFC signal.

The detection control module 22 is configured to detect, according to the first radio frequency signal, that the terminal device is in a low power detection card LPCD mode; and in a case that abnormal communication is performed with the terminal device, send, to the terminal device by using the NFC antenna 21, a second radio frequency signal used to excite the terminal device, so as to communicate with the terminal device.

In the LPCD mode, to reduce power consumption when detecting an NFC secondary device, the terminal device enters a low power mode after a time interval since unlocking, and further, card detection enters the LPCD mode.

The second radio frequency signal is a specific signal used to excite the terminal device. A frequency band range of the specific signal is from 12 MHz to 14 MHz. That is, when receiving the specific signal used for excitation, the terminal device wakes up from the LPCD mode and enters a normal card detection mode.

The normal card detection mode means that the mobile terminal keeps full-power card detection, that is, the normal card detection mode, within a specific time period after unlocking, to increase a speed and a success rate of NFC within a period of unlocking. In both the LPCD mode and the normal card detection mode, the terminal device sends sine waves with 13.56 MHz, except that sending time and amplitudes are different, and energy is coupled by using a coil.

Because the second radio frequency signal is a signal used for excitation, the second radio frequency signal may be an empty carrier signal, and does not include any information. In this way, not only a system burden of transmitting a signal is reduced, but also information transmission efficiency is improved. For example, an operating frequency band of NFC is a frequency with 13.56 MHz. The second radio frequency signal may be but is not limited to an empty carrier signal with 13.56 MHz. In this way, if the terminal device receives a radio frequency signal with 13.56 MHz, the terminal device wakes up from the LPCD mode and enters the normal card detection mode.

Certainly, after the detection control module 22 sends, to the terminal device by using the NFC antenna 21, the second radio frequency signal used to excite the terminal device, if a communication condition of the terminal device does not resume normal communication, the detection control module 22 may resend the second radio frequency signal to the terminal device for multiple times by using the NFC antenna 21, until the terminal device is woken up to be in the normal card detection mode, and normal communication is performed with the terminal device.

After the detection control module 22 sends, to the terminal device by using the NFC antenna 21, the second radio frequency signal used to excite the terminal device, if the communication condition of the terminal device resumes normal communication, the terminal device may read predetermined information in the NFC electric field detection system 10. The predetermined information is preset information in the NFC device. In this way, the terminal device may read the predetermined information, so as to implement communication between the terminal device and the NFC device.

In some examples, the control circuit 222 is further configured to: detect, according to the first radio frequency signal, that the terminal device is in the LPCD mode, and in a case that abnormal communication is performed with the terminal device, determine a terminal type of the terminal device according to a sending period of an electric field of the terminal device; and send, to the terminal device according to the terminal type, the second radio frequency signal used to excite the terminal device. In this way, by determining the terminal type, the second radio frequency signal may be sent according to the terminal type, thereby improving accuracy and timeliness of transmitting the radio frequency signal.

Sending periods of electric fields of different terminal devices are different, and the terminal type may be distinguished by using the sending period of the electric field. The terminal type in this specification is, for example, but is not limited to, terminal devices of different models produced by different manufacturers. For example, a sending period of an electric field of iPhone is generally near 300 ms.

Further, according to the terminal type, the second radio frequency signal used to excite the terminal device is determined from a correspondence between different terminal types and radio frequency signals used for excitation; and the second radio frequency signal is sent to the terminal device.

In this embodiment of this specification, the detection control module 22 is introduced, so that the NFC device working in the passive mode has a sensing capability to the outside. There is a response policy after the NFC antenna 21 performs sensing, for example, an action empty carrier signal such as transmission of an excitation field. The NFC device may direct or complete desired communication under a condition of poor communication quality.

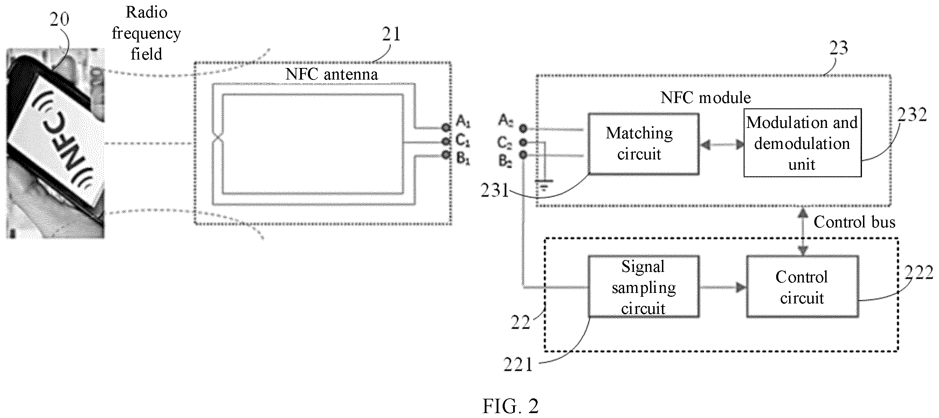

FIG. 2 is a specific schematic structural diagram of the NFC electric field detection system 10 shown in FIG. 1.

As shown in FIG. 2, the NFC antenna 21is configured to: when the terminal device 20 transmits an NFC signal, sense, field strength of the NFC radio frequency field to form an electrical signal corresponding to the field strength. Further, the NFC antenna 21 includes multiple signal output terminals. The multiple signal output terminals shown in FIG. 2 include a signal output terminal A1 and a signal output terminal B1, and electrical signals are output by using the multiple signal output terminals. The NFC antenna 21 may sense, in real time, whether field strength of an NFC radio frequency field exists, so as to avoid missing, thereby implementing accuracy of sensing the field strength of the NFC radio frequency field by the NFC antenna 21.

Correspondingly, the detection control module 22 includes a signal sampling circuit 221 and a control circuit 222 connected to the signal sampling circuit 221.

The signal sampling circuit 221 is configured to sample an electrical signal. Still as shown in FIG. 2, the signal sampling circuit 221 includes a collection input terminal connected to the signal output terminal. The signal sampling circuit 221 collects the foregoing electrical signal by using the collection input terminal. For example, the collection input terminal includes a sampling input terminal A2 and a sampling input terminal B2. In the example shown in FIG. 2, the sampling input terminal B2 is connected to the signal output terminal B1, so as to complete signal collection on the signal output terminal B1 of the antenna. In some other examples, the sampling input terminal A2 is connected to the signal output terminal A1, so as to complete signal collection on the signal output terminal A1 of the antenna. The collection input terminal may be separately connected to any one of the signal output terminal A1 and the signal output terminal B1.

Further, the signal sampling circuit 221 includes an amplitude signal sampling circuit 221, a voltage collection circuit, or a current collection circuit of an analog-to-digital converter (ADC). In this way, the amplitude signal sampling circuit 221 may sample an amplitude signal, such as a level amplitude. The voltage collection circuit or the current collection circuit may collect another form such as an induced current. For example, a current value may be obtained by using a level amplitude and a resistance. The signal sampling circuit 221 transmits a sampled signal to the control circuit 222.

The control circuit 222 is configured to obtain characteristic information of the NFC radio frequency field of the terminal device 20 according to a value of the electrical signal. The characteristic information of the NFC radio frequency field is related information such as a period of transmitting the radio frequency field strength and amplitude strength by the terminal device 20. When the amplitude strength of the characteristic information meets a threshold in the LPCD mode, it is detected that the terminal device 20 is in the LPCD mode. In a case that the terminal device 20 does not read data of the NFC electric field detection system 10, the second radio frequency signal used to excite the terminal device 20 is sent to the terminal device 20. That the data of the NFC electric field detection system 10 is not read is used to reflect that abnormal communication is performed with the terminal device 20.

The threshold may be set according to the LPCD mode and the normal card detection mode, which is not limited herein. For example, the amplitude strength of the characteristic information meets the threshold in the LPCD mode, for example, but is not limited to a level lower than 1 volt, and it may be detected that the terminal device 20 is in the LPCD mode. The amplitude strength of the characteristic information meets the threshold in the LPCD mode, for example, but is not limited to a level higher than 5 volts, and it may be detected that the terminal device 20 is in the normal card detection mode.

The control circuit 222 may include but is not limited to a control chip and a peripheral circuit thereof. For example, the control chip may include but is not limited to a micro controller unit (MCU). The peripheral circuit may be but is not limited to an electronic component including a capacitor, a resistor, or the like, to implement signal processing.

In this embodiment of this specification, a required signal may be collected from the antenna by using the signal sampling circuit 221. By combining the detection control module 22 with the NFC antenna 21, the signal sampling circuit 221 is added to the detection control module 22, so that a source that can transmit a radio frequency field by the external terminal device 20 cannot be sensed. Further, a subsequent correlation policy is completed by using the detection control module 22.

With reference to FIG. 2, the NFC antenna 21 may include the following multiple NFC antennas 21.

In the embodiment of the NFC antenna 21 shown in FIG. 2, the NFC antenna 21 further includes an NFC coil and a grounded noise filtering terminal. The NFC antenna 21 including a noise filtering terminal C1, the signal output terminal A1, and the signal output terminal B1 herein may also be referred to as a three-terminal antenna.

The NFC coil is configured to sense a radio frequency signal; and the noise filtering terminal is configured to filter out a noise signal of the radio frequency signal sensed on the NFC coil, so that the NFC antenna 21 receives a normal signal other than noise.

It should be noted that the noise signal may be but is not limited to low-frequency noise. In some examples, the noise filtering terminal C1 of the NFC antenna 21 is connected to an input terminal C2 of the NFC module 23, and then connected to a board ground, so as to filter out low-frequency noise received on the antenna, and then only a normal signal for communication is received. In some other examples, the noise filtering terminal C1 of the NFC antenna 21 is connected to the input terminal C2 of the NFC module 23. An inductor, a capacitor, or other components may be serially connected along a link thereof, and then connected to the board ground to filter out the low-frequency noise received on the antenna, and then only a normal signal for communication is received. The normal signal for communication is more pure than the signal before noise filtering. The three-terminal antenna is used, and the received noise signal is very small or even no noise signal exists, so it is easy to detect with high accuracy.

The NFC coil includes at least three terminal coils; and the noise filtering terminal is disposed in a physical center of the antenna. In this way, balance of other multiple signal output terminals can be maintained. Further, the noise filtering terminal C1 is disposed in the physical center of the antenna, so as to maintain balance between the signal output terminal A1 and the signal output terminal B 1.

In some embodiments of the at least three terminal coils, the at least three terminal coils include an odd number of terminal coils, the noise filtering terminal is one noise filtering terminal, and the one noise filtering terminal is disposed in the physical center of the NFC antenna 21; and a terminal number of the odd number of terminal coils is greater than or equal to a terminal number of three terminal coils.

In some other embodiments of the at least three terminal coils, the at least three terminal coils include an even number of terminal coils, and correspondingly, the noise filtering terminal is two noise filtering terminals, and the two noise filtering terminals are disposed in the physical center of the NFC antenna 21; and a terminal number of the even number of terminal coils is greater than a terminal number of three terminal coils.

In this embodiment of this specification, according to the three-terminal antenna proposed in the NFC antenna 21, the noise filtering terminal C1 of the NFC antenna 21 is connected to the input terminal C2 of the NFC module 23, and is connected to the board ground. Further, noise of a frequency band is filtered out, and a more pure communication signal may be transmitted to the signal sampling circuit 221, so that the control circuit 222 makes an accurate decision.

In another embodiment of the NFC antenna 21, the NFC antenna 21 includes only two signal output terminals, that is, the signal output terminal A1 and the signal output terminal B1. In this way, the coil of the NFC antenna 21 has two terminals. While sensing an NFC signal (13.56 MHz), the coil of the NFC antenna 21 also senses another signal and forms noise on a circuit, which affects subsequent sampling. In this solution, the signal output terminal A1 and the signal output terminal B 1 of the near field communication NFC antenna 21 are respectively connected to the sampling input terminal B2 of the NFC module 23 and the signal output terminal B1. When the input signal is large enough, the noise may be ignored. In this way, an applicable range of the NFC antenna 21 is increased.

Still as shown in FIG. 2, the detection control module 22 is configured to detect, according to the first radio frequency signal, that the terminal device 20 is in the low power detection card LPCD mode; and in a case that abnormal communication is performed with the terminal device 20, generate a signal used to excite the terminal device 20. The NFC electric field detection system 10 further includes an NFC module 23, configured to: receive the signal used to excite the terminal device 20, perform tuning with the NFC antenna 21, and send a modulated second radio frequency signal to the terminal device 20 by using the NFC antenna 21. In this way, the signal generated by the detection control module 22 may be modulated by using the NFC module 23, and then transmitted by using the NFC antenna 21, so as to ensure validity of signal transmission.

Still as shown in FIG. 2, the NFC module 23 and the detection control module 22 may implement bidirectional communication by using a control bus. Further, the NFC module 23 is further configured to demodulate the received radio frequency signal, and send a demodulated signal to the control circuit 222.

As shown in FIG. 2, the NFC module 23 includes a matching circuit 231 and a modulation and demodulation unit 232 connected to the matching circuit 231.

The matching circuit 231 is configured to perform tuning with the NFC antenna 21, and send a matched signal to the modulation and demodulation unit 232. The matched signal may be a signal obtained after electromagnetic interference is tuned and filtered out. The modulation and demodulation unit 232 is configured to: receive the matched signal, modulate the matched signal to a carrier signal to obtain the second radio frequency signal, and send the second radio frequency signal to the NFC antenna 21. The NFC antenna 21 is further configured to send the second radio frequency signal.

In some examples, the matching circuit 231 is after a cabling of the signal sampling circuit 221. The matching circuit 231 includes an impedance element, configured to adjust an impedance parameter and a resonance frequency parameter, and further configured to adjust parasitic impact of the matching circuit 231 on the cabling of the signal sampling circuit 221. The impedance element may be but is not limited to including a variable capacitor, a variable inductor, and a variable resistor. Further, the variable capacitor and a parasitic inductor of the NFC antenna 21 form a resonance and filter out electromagnetic interference. The matching circuit 231 sends the interference-filtered second radio frequency signal to the modulation and demodulation unit 232. In this way, after a cabling of the matching circuit 231 and the cabling of the signal sampling circuit 221 are arranged, an impedance parameter of the impedance element is adjusted, so that parasitic impact of the matching circuit 231 on the cabling of the signal sampling circuit 221 is changed.

In this embodiment of this specification, the matching circuit 231 is after the cabling of the signal sampling circuit 221, the impedance parameter of the impedance element is adjusted to reduce parasitic impact of the matching circuit 231 on the cabling of the signal sampling circuit 221. In this way, parasitic impact of the matching circuit 231 on the cabling of the signal sampling circuit 221 can be reduced. Further, parasitic impact of the matching circuit 231 on the cabling of the signal sampling circuit 221 is avoided.

An application scenario of the NFC electric field detection system 10 in this specification may be but is not limited to a related enterprise that develops and manufactures an NFC device, such as UnionPay, an aggregated payment device vendor, and a mobile phone.

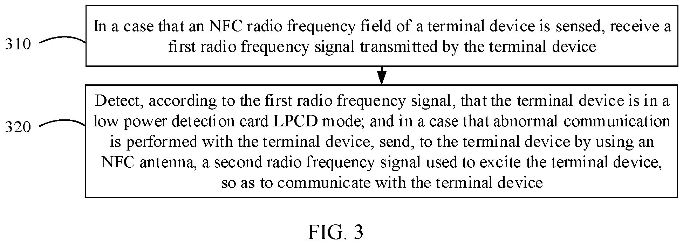

Based on a same application concept as the foregoing NFC electric field system, an embodiment of this specification further proposes an NFC electric field detection method. As shown in FIG. 3, the NFC electric field detection method includes the following steps 310 and 320:

Step 310: In a case that an NFC radio frequency field of a terminal device is sensed, receive a first radio frequency signal transmitted by the terminal device.

Step 320: Detect, according to the first radio frequency signal, that the terminal device is in a low power detection card LPCD mode; and in a case that abnormal communication is performed with the terminal device, send, to the terminal device by using an NFC antenna, a second radio frequency signal used to excite the terminal device, so as to communicate with the terminal device.

In some embodiments, step 310 may further include that: when the terminal device transmits an NFC signal, the NFC antenna senses field strength of the NFC radio frequency field to form an electrical signal corresponding to the field strength;

correspondingly, the detection control module includes a signal sampling circuit and a control circuit connected to the signal sampling circuit. 320 may further include that the signal sampling circuit samples the electrical signal; and the control circuit obtains characteristic information of the NFC radio frequency field of the terminal device according to a value of the electrical signal; and in a case that amplitude strength of the characteristic information meets a threshold in the LPCD mode, detects that the terminal device is in the LPCD mode; or in a case that the terminal device does not read data of the NFC electric field detection system, sends, to the terminal device, the second radio frequency signal used to excite the terminal device.

In some embodiments, 320 may further include: detecting, according to the first radio frequency signal, that the terminal device is in the low power detection card LPCD mode; and in a case that abnormal communication is performed with the terminal device, generating a signal used to excite the terminal device. The NFC electric field detection method further includes: receiving the signal used to excite the terminal device, performing tuning with the NFC antenna, and sending a modulated second radio frequency signal to the terminal device by using the NFC antenna.

An embodiment of this specification provides an NFC device, where the NFC device works in a passive mode, a terminal device that communicates with the NFC device works in an active mode, and the NFC device includes the NFC electric field detection system according to any one of the foregoing.

In this embodiment of this specification, the NFC device that works in the passive mode can not only passively complete communication, but also actively excite the terminal device to wake up the terminal device to perform communication, and a success rate does not need to be completely dependent on the terminal device.

In the descriptions of this specification, it should be understood that the terms such as "first" and "second" are merely intended for a purpose of description, and shall not be understood as an indication or implication of relative importance or implicit indication of the number of indicated technical features. Therefore, a feature limited by "first", "second", or the like can explicitly or implicitly include at least one such feature. In the descriptions of this specification, "a plurality of" means "at least two", for example, two or three, unless otherwise specifically limited.

In this specification, terms "install" "link", "connect", "fix", etc. should be understood in a broad sense unless otherwise definitely stipulated or limited. For example, a connection may be a fixed connection, a detachable connection, or an integrated connection; may be a mechanical connection or an electrical connection; and may be a direct connection, an indirect connection through an intermediate medium, or a connection inside two components or interaction between two components. A person of ordinary skill in the art can understand specific meanings of these terms in this specification based on specific situations.

In this specification, unless otherwise definitely stipulated or limited, a first feature "above" or "below" a second feature can mean direct contact between the first feature and the second feature, or indirect contact between the first feature and the second feature through an intermediate medium. In addition, that the first feature is "above" the second feature can mean that the first feature is right above or diagonally above the second feature, or simply indicate that the first feature is at a higher position than the second feature. That the first feature is "below", "beneath", and "under" the second feature can be that the first feature is right below or diagonally below the second feature, or simply indicate that the first feature is at a lower position than the second feature.

The technical features in the foregoing embodiments may be combined in any manner. To make the description brief, all possible combinations of the technical features in the foregoing embodiments are not described. However, as long as there is no contradiction between the combinations of the technical features, it should be considered as the scope described in this specification.

The foregoing embodiments represent only several implementations of this specification, and description thereof is relatively specific and detailed, but may not be construed as a limitation on the scope of this specification. It should be noted that a person of ordinary skill in the art may make some modifications and improvements without departing from the inventive concept of this specification, which are within the protection scope of this specification.

## Claims

1. An NFC electric field detection system, comprising:
a near field communication NFC antenna, configured to: in a case that an NFC radio frequency field of a terminal device is sensed, receive a first radio frequency signal transmitted by the terminal device; and
a detection control module, configured to detect, according to the first radio frequency signal, that the terminal device is in a low power detection card LPCD mode; and in a case that abnormal communication is performed with the terminal device, send, to the terminal device by using the NFC antenna, a second radio frequency signal used to excite the terminal device, so as to communicate with the terminal device.

2. The NFC electric field detection system according to claim 1, wherein the NFC antenna is configured to: when the terminal device transmits an NFC signal, sense, field strength of the NFC radio frequency field to form an electrical signal corresponding to the field strength;
correspondingly, the detection control module comprises a signal sampling circuit and a control circuit connected to the signal sampling circuit;
the signal sampling circuit samples the electrical signal; and
the control circuit is configured to obtain characteristic information of the NFC radio frequency field of the terminal device according to a value of the electrical signal; and in a case that amplitude strength of the characteristic information meets a threshold in the LPCD mode, detect that the terminal device is in the LPCD mode; or in a case that the terminal device does not read data of the NFC electric field detection system, send the second radio frequency signal to the terminal device.

3. The NFC electric field detection system according to claim 2, wherein the NFC antenna further comprises an NFC coil and a grounded noise filtering terminal;
the NFC coil is configured to sense a radio frequency signal; and
the noise filtering terminal is configured to filter out a noise signal of the radio frequency signal sensed on the NFC coil, so that the NFC antenna receives a normal signal other than noise.

4. The NFC electric field detection system according to claim 3, wherein the NFC coil comprises at least three terminal coils; and the noise filtering terminal is disposed in a physical center of the antenna.

5. The NFC electric field detection system according to claim 4, wherein the at least three terminal coils comprise an odd number of terminal coils, the noise filtering terminal is one noise filtering terminal, and the one noise filtering terminal is disposed in the physical center of the NFC antenna; and a terminal number of the odd number of terminal coils is greater than or equal to a terminal number of three terminal coils;
or
the at least three terminal coils comprise an even number of terminal coils, and correspondingly, the noise filtering terminal is two noise filtering terminals, and the two noise filtering terminals are disposed in the physical center of the NFC antenna; and a terminal number of the even number of terminal coils is greater than a terminal number of three terminal coils.

6. The NFC electric field detection system according to any one of claims 1 to 5, wherein the detection control module is configured to detect, according to the first radio frequency signal, that the terminal device is in the low power detection card LPCD mode; and in a case that abnormal communication is performed with the terminal device, generate a signal used to excite the terminal device; and
the NFC electric field detection system further comprises an NFC module, configured to: receive the signal used to excite the terminal device, perform tuning with the NFC antenna, and send a modulated second radio frequency signal to the terminal device by using the NFC antenna.

7. The NFC electric field detection system according to claim 6, wherein the NFC module comprises a matching circuit and a modulation and demodulation unit connected to the matching circuit;
the matching circuit is configured to: perform tuning with the NFC antenna, and send a matched signal to the modulation and demodulation unit;
the modulation and demodulation unit is configured to: receive the matched signal, modulate the matched signal to a carrier signal to obtain the second radio frequency signal, and send the second radio frequency signal to the NFC antenna; and
the NFC antenna is further configured to send the second radio frequency signal.

8. The NFC electric field detection system according to claim 7, wherein the matching circuit is after a cabling of the signal sampling circuit; and
the matching circuit comprises an impedance element, configured to adjust an impedance parameter and a resonance frequency parameter, and further configured to adjust parasitic impact of the matching circuit on the cabling of the signal sampling circuit.

9. The NFC electric field detection system according to claim 2, wherein the signal sampling circuit comprises an amplitude signal sampling circuit, a voltage collection circuit, or a current collection circuit of an analog-to-digital converter ADC.

10. The NFC electric field detection system according to claim 1, wherein the detection control module is further configured to: detect, according to the first radio frequency signal, that the terminal device is in the LPCD mode, and in a case that abnormal communication is performed with the terminal device, determine a terminal type of the terminal device according to a sending period of an electric field of the terminal device; and send the second radio frequency signal to the terminal device according to the terminal type.

11. An NFC electric field detection method, comprising:
in a case that an NFC radio frequency field of a terminal device is sensed, receiving a first radio frequency signal transmitted by the terminal device; and
detecting, according to the first radio frequency signal, that the terminal device is in a low power detection card LPCD mode; and in a case that abnormal communication is performed with the terminal device, sending, to the terminal device by using an NFC antenna, a second radio frequency signal used to excite the terminal device, so as to communicate with the terminal device.

12. An NFC device, wherein the NFC device works in a passive mode, a terminal device that communicates with the NFC device works in an active mode, and the NFC device comprises the NFC electric field detection system according to any one of claims 1 to 10.

13. A computer-readable storage medium, wherein the computer-readable storage medium stores a computer program, and when the computer program is executed by a processor, the processor is caused to perform the method of claims 11.

14. A computer program comprising computer executable instructions which when executed by a processor cause the processor to implement the method of claims 11.

15. An apparatus comprising means for performing the steps of the method of claims 11.
